**Europäisches Patentamt**

**European Patent Office**

**Office européen des brevets**

(19)

(11) Publication number: **0 404 733**

**A1**

(12) # EUROPEAN PATENT APPLICATION

(21) Application number: **90830206.0**

(51) Int. Cl.⁵ **H02G 1/12**

(22) Date of filing: **10.05.90**

The title of the invention has been amended (Guidelines for Examination in the EPO, A-III, 7.3).

(30) Priority: **19.05.89 IT 53589 U**

(43) Date of publication of application:
**27.12.90 Bulletin 90/52**

(84) Designated Contracting States:
**AT BE CH DE DK ES FR GB GR LI LU NL SE**

(71) Applicant: **PIERGIACOMI SUD - S.R.L.**
**Via XXIV Maggio (Zona Industriale)**
**I-63033 Centobuchi di Monteprandone (AP)(IT)**

(72) Inventor: **Carini, Enrico**
**Via Respighi 9**
**I-60022 Castelfidardo(IT)**

(74) Representative: **Baldi, Claudio**
**Piazza Ghislieri, 3**
**I-60035 Jesi (Ancona)(IT)**

(54) **Cable stripping tool with an adjustable stiletto.**

(57) This invention concerns a "cable stripping" tool whose box-type handle is fitted with an adjusting device which allows the cutting stiletto to move longitudinally thereby turning wheel which does not translate while turning so that the transverse slots through which this wheel passes out of the handle are exactly the same length as the thickness of the wheel.

FIG.3

## Cable Stripping Tool Having an Adjusting Wheel in the Handle which Revolves but Does Not Translate for Expelling the Tip of the Sheath-Cutting Stiletto.

This patent application for an industrial utility model concerns a tool for cutting and stripping the external sheath of electric cables,generally known as a "cable stripper". The device has a box-type handle with a built-in revolving wheel For adjusting the ejection of the cutting stiletto which must move in and out of the "cable stripper" according to the thickness of sheath to be cut.

The Stilettos fitted "cable strippers" produced to date are generally fixed to the threaded shank of a screw which is fixed to a nut screw inside the handle.

In an original construction version; the head of this adjusting screw was in fact buried with respect to the bottom end of the handle, so that a screw driver was required to make adjustments. whose tip obviously had to be fitted into the housing on the head of the screw

In order to eliminate the inconvenience of having to use a screwdriver when making these adjustments, a second version was recently designed where the head of this adjustment screw consisting of a knurled knob projects from the head of the screw. By turning the knurled knob of the screw the same can be screwed in or out with respect to the handle and consequently moves the stiletto cutting tip in or out. Although this knob is small. it has proved to be inconvenient when using the tool in that it is in fact a body which project, from the bottom the handle and may sometimes hinder or inconvenience certain types of operations. The designers consequently decided to construct this knob in the handle which, in this case, must have two opposing side slots out of which the knob projects slightly so that it can be rotated between the forefinger and thumb. The length of these side slots must be greater than the thickness of the knob to allow the same to run longitudinally when adjusted, for a maximum distance which must obviously correspond to the distance covered by the cutting tip of the stiletto from its maximum position to the minimum expulsion position.

To make the finish more attractive, obviously the length of these side slots should be kept as small as possible, but this on the other hand compromises the possibility of adequately adjusting the movement of the cutting stiletto out of the "cable stripping" handle. It is evident that the more the tool can be adjusted, the more uses it will have in that it can be used for stripping the sheath of many different diameter cables.

The purpose of this invention is to create a device for adjusting the expulsion run of the cutting stiletto used in "cable stripping" tools, which can be operated by means of a knurled revolving wheel which does not translate and which is built into the handle of the tool and projects outwards through the opposing side slots whose length is the same as the thickness of the wheel.

The particular feature of the "cable stripper" according to the invention is that the tool is fitted with an adjusting device which allows the cutting tool to move longitudinally by turning a wheel which rotates without translating so that the transverse wheel through which this wheel projects from the handle is of exactly the same length as the thickness of the wheel.

The adjustment device in question consists of a knurled wheel fitted with axial threaded pin which is fitted into a right angle parallelepipedon sliding block with a square section which is free to slide longitudinally in the "cable stripping" cable contained by side edges

The cutting stiletto is hooked to this sliding block and the run of the latter is consequently determined by the run of the sliding block which in turn is created by the. rotation of the wheel which does not perform longitudinal translations, since the same is housed precisely into the two above transverse slots, so that in the helicoidal pair consisting of the sliding block which acts as a nut screw; and the threaded pin joined to the wheel, the ring is forced to move axially since the screw can not do so

For major clarity the description of the invention proceeds with reference to the enclosed drawings indicated only for purposes of illustration and not in a limiting sense, where:

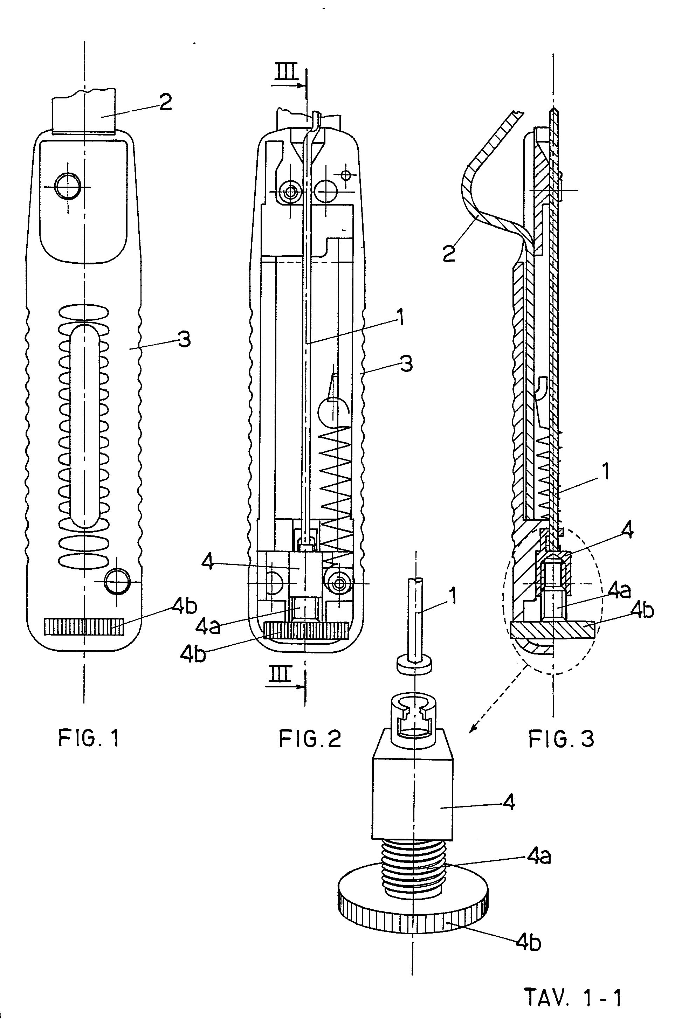

- fig. 1 is a side view of the cable stripping tool, according to the invention;

- fig. 2 is a view like that in fig. 1 but without the handle lid of the cable stripper;

- fig. 3 is the cross-section of fig with plane III-III.

With reference to the above figures the model the shape and the position of the various parts are like that of a standard "cable stripper": the cutting stiletto (1) for cutting the sheath of the electric cable, the blade (2) for removing the cut sheath from the cable, the box-type handle (3) consisting of two coupled half-shells housing the axial stiletto (1), a section of the blade (2) and the device for adjusting the expulsion run of the stiletto (1).

The "cable stripper" according to the invention is characterized by the fact that the cutting cable stripper (1) is hooked internally to the handle (3) to a sliding block (4) having a square cross-section parallelepipedon shape; which is housed in a longitudinal sliding track with two side edges.

On the back wall of this sliding plate (4) there is a threaded hole in which a threaded shank (4a), coaxial to the stiletto, is fitted, the same being hooked to the front face of the sliding block (4).

This threaded shank (a) has a head consisting of a knurled wheel (4b) which is completely closed in the handle (3), with exception of two short opposing sections which project out of the handle (3) through two side slots, made especially for this purpose, on both half-shells of the handle (3). The length of these slots is exactly the same as the thickness of the wheel (4b) which can therefore not move in a longitudinal direction but can only rotate around a longitudinal axis.

As previously mentioned, since the threaded shank makes the wheel (4b) rotate, it also forces the sliding block (4) to move longitudinally in the relative sliding housing so that the cutting tip of the stiletto (1) moves in or out according to the direction of rotation of the wheel (4b) The "cable stripper" according to the invention offers another advantage with respect to standard models in that when the adjusting wheel (4b) rotates it does not also rotate the stiletto (1) in the same direction so that the same translates only together with the sliding block contrary to current standard models where the stiletto (1) rotates around its own longitudinal axis together with the threaded shank of the screw to which it is hooked.

## Claims

1) "cable stripping" tool having a revolving wheel which does not translate, built into the handle, for adjusting the movement of the sheath-cutting stiletto consisting of a sheath-cutting stiletto (1), a blade (2) for removing the cut sheath, a box-type handle (3) consisting of two coupled and joined half-shells, **characterized in that** it has a wheel (4b) completely fitted in the bottom of the handle (3) with exception of two short opposing sections which project out of the handle through two transverse slots on the two half-shells of the handle (3) whose length is exactly the same as the thickness of the adjusting wheel (4b) which rotates together with a threaded axial shank (4a), screwed into a sliding block (4) having a parallelepipedon shape which can translate longitudinally in a track inside the handle (3) since the cutting stiletto (1) is hooked at the front of this sliding block (4) whose longitudinal runs are obviously determined by the rotation of the wheel (4b)

FIG. 1

FIG. 2

FIG. 3

TAV. 1 - 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | BE-A-870337 (STANLEY TOOLS)<br>* page 4, line 12 - page 8, line 11; figures 1-8 * | 1 | H02G1/12 |
| A | CH-A-189238 (WILDBACH)<br>* page 1, column 2, paragraph 7 - page 2, column 1, paragraph 2; figures 1-4 * | 1 | |

**TECHNICAL FIELDS SEARCHED (Int. Cl.5 )**

H02G

The present search report has been drawn up for all claims

| Place of search | Date of completion of the search | Examiner |
|---|---|---|
| THE HAGUE | 24 OCTOBER 1990 | DEMOLDER J. |